Europäisches Patentamt

European Patent Office

Office européen des brevets

(11) Veröffentlichungsnummer: **0 396 890**
**A1**

(12) **EUROPÄISCHE PATENTANMELDUNG**

(21) Anmeldenummer: **90105632.5**

(51) Int. Cl.5: **B65G 45/12**

(22) Anmeldetag: **24.03.90**

(30) Priorität: **12.05.89 DE 3915609**

(43) Veröffentlichungstag der Anmeldung:
**14.11.90 Patentblatt 90/46**

(84) Benannte Vertragsstaaten:
**AT BE CH DE DK ES FR GB GR IT LI LU NL SE**

(71) Anmelder: **F.E. Schulte Strathaus KG**
**Max-Planck-Strasse 8**
**D-4750 Unna(DE)**

(72) Erfinder: **Schulte Strathaus, Michael, Dr.**
**Kapellenstrasse 33**
**D-5757 Wickede/Ruhr(DE)**
Erfinder: **Schulte Strathaus, Franz E.**
**Peukinger Weg 94**
**D-4750 Unna(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Vorrichtung zum Reinigen von Förderbändern.

(57) Mit einer Vorrichtung zum Reinigen von Förderbändern (30) mit wenigstens einer an schwenkbaren, gefederten Auslegern (2e) angeordneter Abstreifleiste (3e) zur Beaufschlagung der Arbeitsfläche des Gurtbandes (30) im Untertrum, wobei die Abstreifleiste (3e) an um eine Drehachse starren Auslegerarmen (2e) angeordnet ist, wobei die Auslegerarme (2e) mit Federn (4e) zur Aufbringung des Anpreßdruckes ausgerüstet sind, soll eine Lösung geschaffen werden, mit der derartige Vorrichtungen in ihrer Einsatzfähigkeit verbessert werden, wobei ein flexibleres Eingehen auf unterschiedliche Einbausituationen möglich gemacht wird, insbesondere auch schwer zugängliche Einbausituationen den Einbau derartiger Vorrichtungen nicht behindern.

Dies wird dadurch erreicht, daß die Abstreifleisten (3e) an in ihrer Länge verstellbaren Auslegerarmen (2e) angeordnet sind, wobei diese Auslegerarme (2e) über einen Torsionsstab (33) mit einseitiger Federbeaufschlagung gelagert sind.

Fig. 14

## Vorrichtung zum Reinigen von Förderbändern

Die Erfindung richtet sich auf eine Vorrichtung zum Reinigen von Förderbändern mit wenigstens einer an schwenkbaren, gefederten Auslegern angeordneter Abstreifleiste zur Beaufschlagung der Arbeitsfläche des Gurtbandes im Untertrum, wobei die Abstreifleiste an um eine Drehachse starren Auslegerarmen angeordnet ist, wobei die Auslegerarme mit Federn zur Aufbringung des Anpreßdrukkes ausgerüstet sind.

Für die Reinigung von Gurtbändern sind eine Reihe von Abstreifern bekannt, etwa Förderbandabstreifer der Fa. Hoppe oder sogenannte Bänderabstreifer der Fa. Joto Bergbautechnik. Als Beispiel sei auf die DE-OS 27 02 841 oder die europäische Patentanmeldung 0 157 246-A1, das deutsche Gebrauchsmuster 82 87 795 oder das Patent 23 19 736 verwiesen. Bei den bekannten Lösungen sind die Gurtabstreifer beispielsweise an blattfederähnlichen Auslegerarmen befestigt, die für den notwendigen Anpreßdruck an das Untertrum der Gurtbänder sorgen. Die Patentschrift 23 19 736 zeigt einzelne Abstreifklingen, die mittels individueller Federn an das Gurtband gedrückt werden, wobei der Hauptanpreßdruck über einen Schwenkhebelarm mit Ballastgewicht aufgebracht wird.

Bei den bekannten Lösungen besteht ein Nachteil darin, daß diese nicht immer an jedem beliebigen Stelle eingebaut werden können, will man nicht auf die Federwirkung wenigstens teilweise verzichten. Auch ist nicht immer gewährleistet, daß die Anpreßkraft genau einstellbar und ggf. veränderbar ist, was insbesondere dann nützlich sein kann, wenn die Abstreifleisten verschleißen und sich daher die Zustellwege verändern bzw. entsprechende Nachstellmaßnahmen notwendig werden.

Aus der DE-10 72 190-A1 ist eine gattungsgemäße Vorrichtung bekannt, nach der ebenfalls über einen Hebeltrieb mittels einer Feder der Anpreßdruck von doppelt angeordneten Abstreifleisten aufgebracht wird. Eine etwas andere Lösung zeigt die DE-10 15 382-A1, die Abstreifer für reversierbare Förderbänder zeigt, die kurze Schableisten offenbart, die in Winkelüberdeckung zueinander stehen.

Eine Abstreifleiste an einem Winkelarm, der über Federn in Anpreßdruck an das Gurtband gezogen wird, zeigt auch die DE-27 54 263-A1, die eine Kunststoffschableiste offenbart, die um ein Trägermetall gegossen ist. Die Fülle der hier zitierten Lösungen zeigt, welch starkes Bedürfnis nach wirtschaftlich sinnvollen und funktionalen Lösungen in der Praxis besteht.

So ist es Aufgabe der Erfindung, eine Lösung zu schaffen, mit der derartige Vorrichtungen in ihrer Einsatzfähigkeit verbessert werden, wobei ein flexibleres Eingehen auf unterschiedliche Einbausituationen möglich gemacht wird, insbesondere auch schwer zugängliche Einbausituationen den Einbau derartiger Vorrichtungen nicht behindern.

Die Aufgabe wird gemäß der Erfindung dadurch gelöst, daß die Abstreifleisten an in ihrer Länge verstellbaren Auslegerarmen angeordnet sind, wobei diese Auslegerarme über einen Torsionsstab mit einseitiger Federbeaufschlagung gelagert sind.

Die erfindungsgemäße Lösung hat erhebliche Vorteile, insbesondere was Montage und Wartung angeht, da sie den Zugang zu allen wesentlichen Elementen von nur einer Seite des Gurtbandes her möglich macht und damit für optimale Einbausituationen sorgt. Gleichzeitig wird es möglich, einer Vielzahl von Einbausituationen gerecht zu werden mit nur einer einmal konzipierten Abstreifvorrichtung, wobei zum einen die Länge der Auslegerarme variabel gestaltbar ist und zum anderen in Verbindung damit im Bereich des Drehpunktes eine einstellbare Anpreßkraft je nach Anbausituation aufgebracht werden kann.

In Ausgestaltung sieht die Erfindung vor, daß jeder Auslegerarm mit wenigstens einer Zug- oder Druckfeder zur Aufbringung des Anpreßdruckes ausgerüstet ist. Grundsätzlich könnte jede Abstreifleiste an einer Lagergabel vorgesehen sein, die dann mit einem einzigen Federpaket beaufschlagbar ist, zweckmäßig wird aber jeder einzelne individuelle Auslegerarm federbelastet ausgeführt.

Die Erfindung sieht auch vor, daß die Zustellkraft der Federn einstellbar und nach außen optisch gekennzeichnet ist.

Als besonders zweckmäßig hat sich erwiesen, an jedem Auslegerarm neben der Zugfeder dazu achsial auch eine Druckfeder zur Ermöglichung einer gezielten Auslenkung gegen die Anpreßrichtung vorzusehen, wie dies ein weiteres Ausgestaltungsmerkmal der Erfindung darstellt.

Damit ist eine Art Reversierbetrieb möglich, was insbesondere dann von großem Vorteil ist, wenn die Umlaufgeschwindigkeiten des Bandes während des Betriebes schwanken oder gar wenn die Umlaufrichtung des Bandes wenigstens kurzzeitig umgekehrt wird.

Je nach Einbausituation kann es sinnvoll sein, wenn der Auslegerarm als geteilter Winkelarm ausgebildet ist, wobei dann beispielsweise in weiterer Ausgestaltung die geteilten Winkelarme über ein Gleitgelenk miteinander verbunden sind.

Auch in einem solchen Falle sieht die Erfindung vor, daß die wirksame Länge der einzelnen Winkelarme veränderbar ist. Die Teilung des Auslegerarmes hat mehrere Vorteile. Einmal wird eine sehr kompakte Bauweise der Vorrichtung erreicht, zum anderen läßt sich auch eine Beaufschlagung der Abstreifleiste im Bereich der Umlenktrommel des Gurtbandes exzentrisch zu deren Winkelachse mit einfachen Mitteln verwirklichen, wobei in einem solchen Falle auch die besondere Winkelarmlängen-Variation vorteilhaft ist. Ein einfacher Kopfabstreifer ist z.B. in dem DE-U-87 14 352 beschrieben.

Die Erfindung sieht auch vor, daß das Drehgelenk mit Feder mit einem Schutzgehäuse versehen ist, was sich insbesondere dann anbietet, wenn derartige Anlagen im rauhen Betrieb unter oder über Tage eingesetzt werden, wo es zu erheblichen Verschmutzungen und damit Belastungen dieser Bauteile kommen kann.

Um der Veränderung der Winkelstellung der unterschiedlichen Anpreßpositionen folgen zu können, sieht die Erfindung auch vor, daß die Druck- bzw. Zugfedern auf einer verschwenkbaren Tragplatte und/oder auf einer Kulissenfläche angeordnet sind.

Wie eingangs bereits erwähnt, liegt ein Teilproblem im Verschleiß der Abstreifleisten und deren Lagerung in Verbindung mit den Federbelastungen.

In weiterer Ausgestaltung sieht daher die Erfindung vor, daß die Abstreifleisten, wie an sich bekannt, als Tandemleisten parallel nebeneinander angeordnet und auf einer Schwenkwippenlagerung angeordnet sind, wobei der Schwenkausschlag über Einstellschrauben in beiden Richtungen begrenzbar ist.

Es hat sich gezeigt, daß die Schwenkwippenlagerung der Tandemleisten mit Ausschlagbegrenzung zu optimalen Ergebnissen führt, insbesondere zur Vergleichmäßigung des Verschleißes und damit zur Optimierung der Einstellungsmöglichkeit.

Die Erfindung sieht auch vor, daß jede Abstreifleiste aus einer Mehrzahl von nebeneinander liegenden Lamellen gebildet ist, wobei ein gemeinsamer Lamellenträger an der Achse der Abstreifleiste federnd befestigt ist. Es sei darauf hingewiesen, daß es bei Abstreifleisten bekannt ist, einzelne Lamellen individuell mit Federn zu beaufschlagen, wie dies etwa in der GB-A-2 173 792 beschrieben ist. Demgegenüber sieht die Erfindung vor, die Lamellen nicht einzeln von Federn am zu reinigenden Gurtband anpassen zu lassen, sondern den Leistenträger relativ zur Achse der Ab streifleiste federnd zu gestalten, wobei sich bei gegenüberliegender Anordnung der Federn eine Selbstnachstellung der Abstreifleisten bei Verschleiß automatisch ergibt.

Die Erfindung sieht auch vor, daß die einzelnen Lamellen auswechselbar am Lamellenträger und/oder an der Abstreifleistenachse befestigt sind, wobei insbesondere vorgesehen sein kann, daß die Verschleißkörper-Lamellen der Federleisten über am jeweiligen Lamellenträger bzw. an der Abstreifleistenachse befestigten U- bzw. C-Profilen angeordnet sind.

Weitere Einzelheiten, Merkmale und Vorteile der Erfindung ergeben sich aufgrund der nachfolgenden Beschreibung sowie anhand der Zeichnung, diese zeigt in

Fig. 1 eine Seitenansicht eines Ausführungsbeispieles der Vorrichtung,

Fig. 2 eine Teilseitenansicht im Bereich der Abstreifleisten,

Fig. 3 eine Detailansicht der Lagerung der Abstreifleisten mit Schwenkausschlagbegrenzung,

Fig. 4 die Seitenansicht einer Ausführungsvariante der Federung,

Fig. 5 eine Aufsicht auf Fig. 4,

Fig. 6 und 6a eine Seitenansicht und eine Aufsicht auf ein weiteres Ausführungsbeispiel der Federung,

Fig. 7 eine Detailansicht einer Doppelfederung,

Fig. 8 ein weiteres Ausführungsbeispiel einer Federungsvariante,

Fig. 9 einen vereinfachten Schnitt durch eine Abstreifleiste,

Fig. 10 die Detailansicht einer Abstreifleiste im Schnitt,

Fig. 11 einen Schnitt durch Fig. 10 gemäß Linie XI-XI in Fig. 10,

Fig. 12 eine weitere Variante eines Ausführungsbeispieles einer Abstreifleiste,

Fig. 13 einen Schnitt gemäß Linie XIII-XIII in Fig. 12,

Fig. 14 eine räumliche Darstellung eines weiteren Ausführungsbeispieles der Erfindung sowie in den

Fig. 15 und 16 Federeinstelleinrichtungen in zwei unterschiedlichen Ausführungsvarianten.

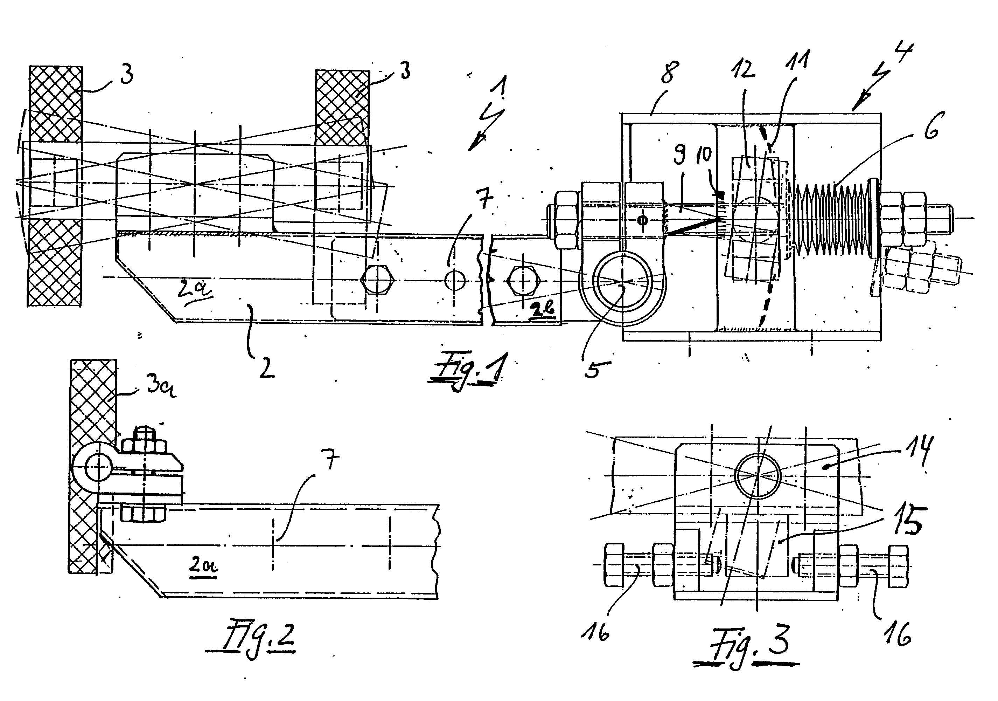

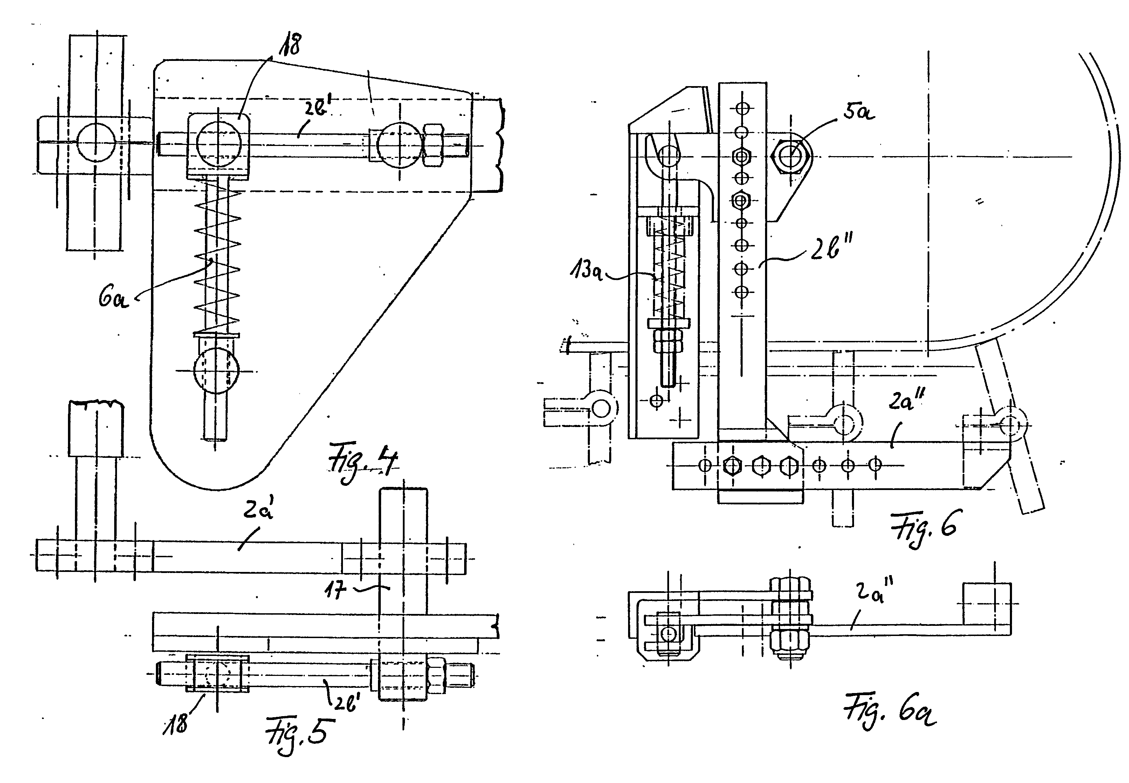

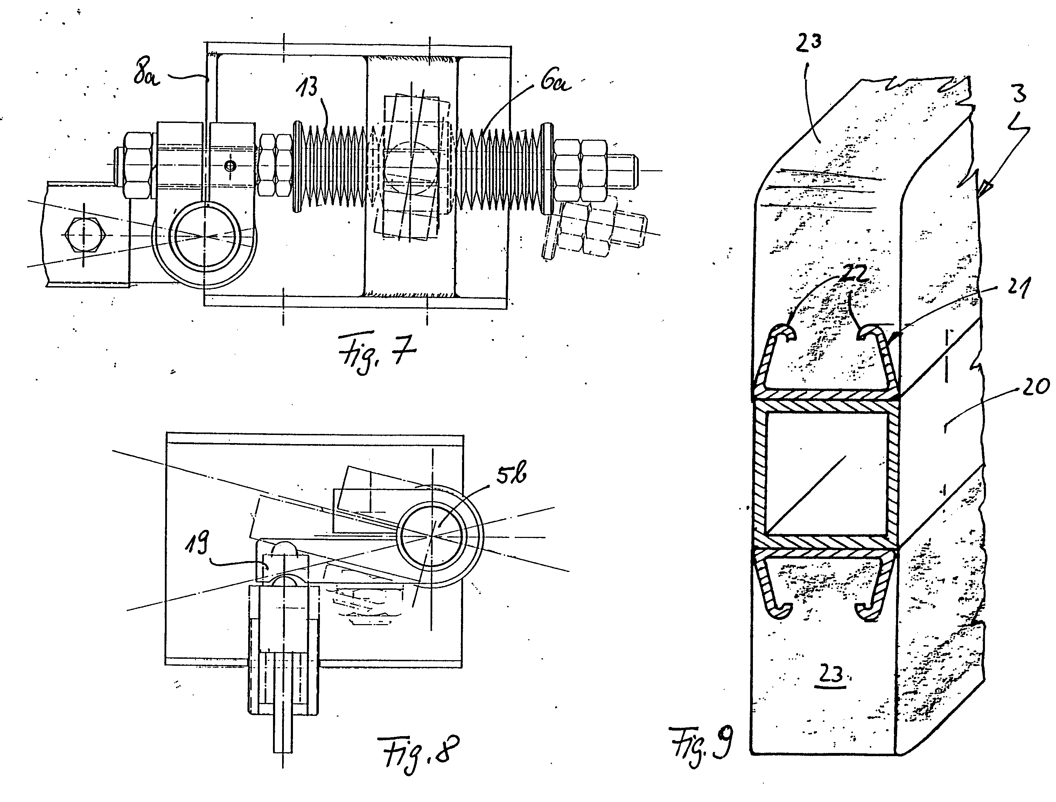

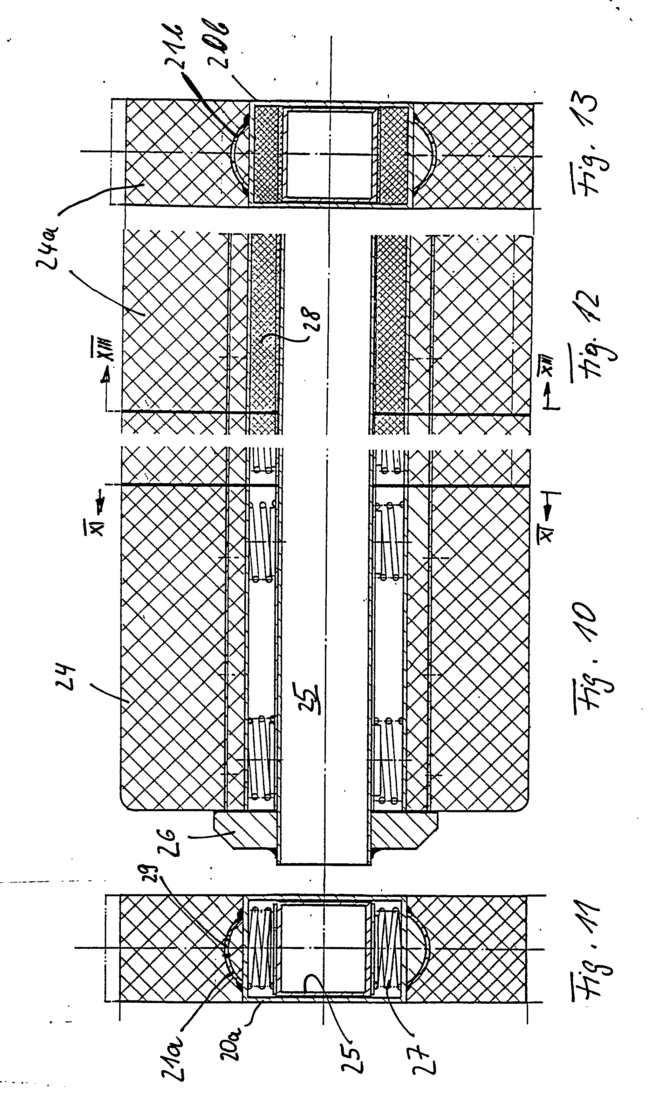

Die in Fig. 1 allgemein mit 1 bezeichnete Abstreifvorrichtung für ein nicht näher dargestelltes Untertrum eines Förderbandes wird von einem starren Auslegerarm 2, daran angeordneten Abstreifleisten 3 und einer allgemein mit 4 bezeichneten Federung gebildet, wobei der Auslegerarm 2 um eine Schwenkachse 5 gegen die Kraft wenigstens einer Feder 6 verschwenkbar ist.

Die Länge des Auslegerarmes 2 läßt sich in der Weise verändern, daß beispielsweise auf Abstand angeordnete Lochreihen 7 in entsprechend zusammenfügbaren Teilen 2a und 2b des Auslegerarmes vorgesehen sind. Die Federeinrichtung 4 mit dem Federpaket 6 gemäß Fig. 1 kann in einem geschlossenen Gehäuse 8 untergebracht sein mit einem nicht näher dargestellten Sichtfenster. Dieses Sichtfenster soll ermöglichen, daß eine optische Anzeigeeinrichtung 9, 10 vom Benutzer erkannt werden kann, die den eingestellten Anpreßdruck der Feder 6 nach außen kenntlich macht.

Um das Verschwenken des Federpaketes 6 zu ermöglichen, ist beispielsweise eine gekrümmte Kulissenfläche 11, in Fig. 1 nur gestrichelt angedeutet, vorgesehen oder eine verschwenkbare Tragplatte 12, die ebenfalls in Fig. 12 angedeutet ist.

In diesem Zusammenhang sei auf die Fig. 7 hingewiesen, die darstellt, daß anstelle einer Feder 6, diese Feder ist dort mit 6a bezeichnet, im gemeinsamen Gehäuse 8a eine weitere Druckfeder 13 vorgesehen sein kann, um einen Reversierbetrieb zu ermöglichen. Dies wird beispielsweise dadurch erreicht, daß beim Einbau die rechte Feder 6a zunächst vorgespannt wird. Ist der nötige Anpreßdruck vorhanden, wird die linke Feder 13 nachgespannt, so daß eine Zug- und Druckbelastung in die jeweilige Federkraft möglich gemacht wird.

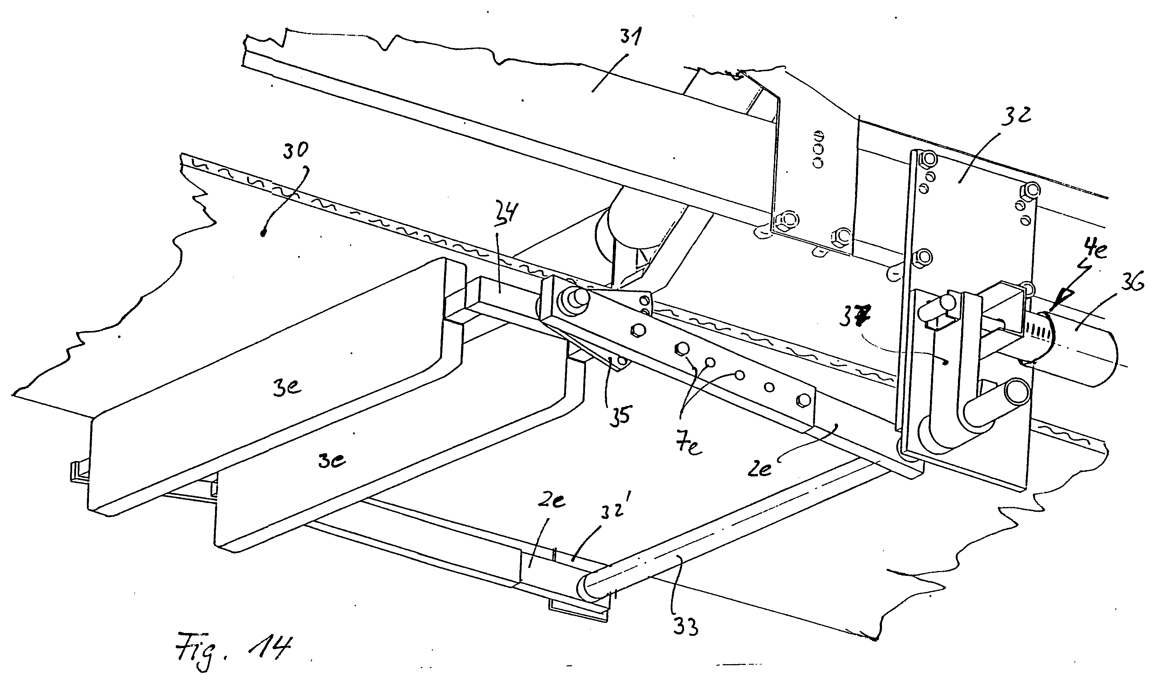

In Fig. 2 ist dargestellt, daß anstelle zweier Abstreifleisten 3 in Tandemaufhängung auch eine einzelne Abstreifleiste 3a vorgesehen sein kann mit der entsprechenden Befestigung am Auslegerteilarm 2a.

Die Fig. 3 zeigt, daß die Abstreifleisten 3 in einer Schwenk-Kippenlagerung 14 angeordnet sind, wobei ein nach unten weisender Schwenkzapfen 15, der der Schwenkbewegung der Tandemleisten 3 folgt, über Einstellschrauben 16 in seinem Schwenkweg bzw. Schwenkausschlag begrenzbar ist.

Die Fig. 4 und 5 zeigen eine Variante, die darin besteht, daß der Auslegerarm 2 geteilt ausgebildet sein kann und hier aus den Elementen 2a' und 2b' besteht, die zur synchronen Bewegung starr an einem gelagerten Wellenzapfen 17 befestigt sind. Die Auslegerteilarme 2a' und 2b' werden auch als Winkelarme bezeichnet, wobei sie hier relativ zueinander den Winkel 0 einnehmen. Die Druckfeder 6a ist mittels eines Gleitgelenkes 18 am Winkelarm 2b' befestigt, womit alle Winkellagen ohne weiteres überbrückt werden können.

Die Fig. 6 und 6a zeigen eine andere Gestaltung der geteilten Winkelarme, dort mit 2a'' und 2b'' bezeichnet, die im rechten Winkel zueinander stehen. Hier ist die Feder als Zugfeder 13a gestaltet, die den einen Winkelarm 2b'', schwenkbar um die Schwenkachse 5a, beaufschlagt. Erkennbar sind beide Winkelarme 2a'' und 2b'' in ihrer Länge veränderbar.

Fig. 8 zeigt eine ähnliche Gestaltungslösung, wie sie in Fig. 4 dargestellt ist, statt des Gleitgelenkes 18 ist hier eine Kalottenlagerung 19 vorgesehen.

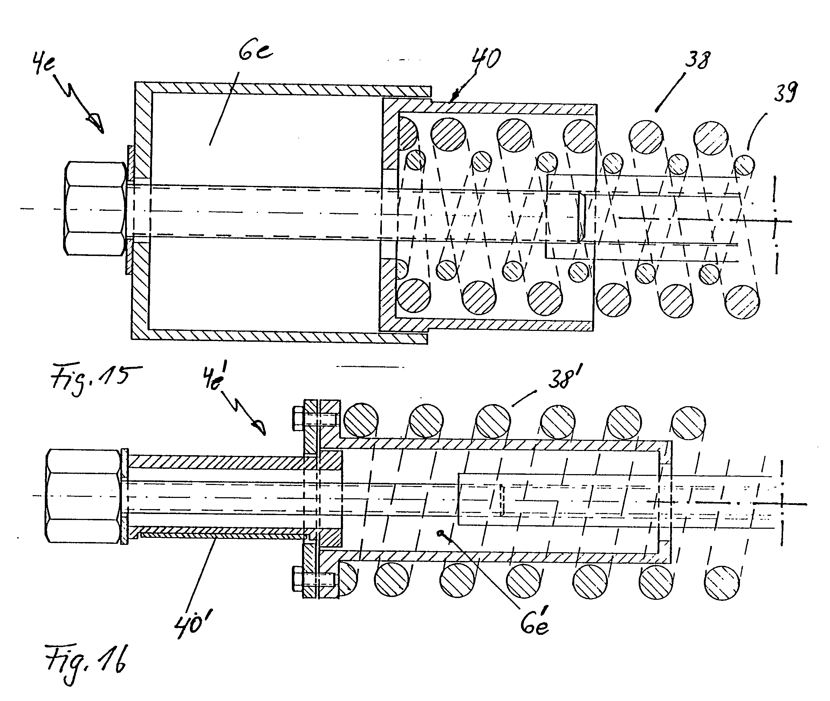

Fig. 9 stellt die vergrößerte und vereinfachte Darstellung einer Abstreifleiste 3 dar mit einem als Hohlprofil ausgebildeten Leisten- oder Lamellenträger 20, dort als quadratisches Profil angedeutet. An dem Leistenträger 20 sind jeweils Profilleisten befestigt, etwa durch Verschweißen, die hier als nach außen offenes querschnittlich etwa C-förmiges Profil 21 gestaltet sind. Wesentlich an dieser Profilform ist, daß die freien Enden 22 des Profiles nach innen umgebogen sind, womit zwei Vorteile verbunden sind. Zum einen läßt sich der Kunststoff der Abstreifleisten, der Kunststoffblock 23 der Abstreifleisten leichter umspritzen, zum anderen wird erreicht, daß nach Abrieb des Kunststoffblockes 23 keine scharfen Profilkanten am Gurtband schleifen.

Die Fig. 10 bis 13 zeigen Abstreifleisten aus einer Mehrzahl von nebeneinander liegenden Lamellen 24, die am Lamellenträger 20a bzw. 20b befestigt sind, der seinerseits über eine Abstreifleistenachse, mit 25 bezeichnet, geschoben ist. Die Lamellen werden nacheinander aufgeschoben und dann mittels einer Halteplatte 26 auf der Abstreifleistenachse 25 auswechselbar gehalten, was den Vorteil hat, daß bei Verschleiß beispielsweise die inneren Lamellen gegen die äußeren ausgetauscht werden können, um den aufgetretenen Verschleiß bereichsweise rückgängig zu machen.

Wesentlich bei den Ausgestaltungen in den Fig. 10 bis 13 ist, daß die einzelnen Lamellen 24 bzw. 24a mit ihren Lamellenträgern 20a bzw. 20b beidseitig federnd gegenüber der Abstreifleistenachse 25 gelagert sind, die Federn gemäß Fig. 10 und 11 sind mit 27 bezeichnet, die elastische Lagerung nach den Fig. 12 bis 13 mit 28. Damit ergibt sich eine individuelle Einstellung jeder Lamelle bzw. Abstreifleiste relativ zur Abstreifleistenachse 25 und damit zu den Auslegerarmen 2 und der auf diese wirkenden Federung. Der verschleißende Kunststoff der Lamellen 24 findet in dem dargestellten Beispiel gemäß Fig. 10 bis 13 seinen Halt in Rundprofilen 21a bzw. 21b, die oben mit Löchern 29 ausgerüstet sind, um das Durchdringen des Kunststoffmateriales zu ermöglichen.

In Fig. 14 ist ein abgewandeltes Ausführungsbeispiel der Erfindung dargestellt. Hier ist ein Gurt 30 mit seinem Untertrum wiedergegeben, wobei am Lagergestell 31 beidseitig je eine Tragplatte 32 bzw. 32' befestigt ist, zwischen denen ein Torsionsstab 33 drehbar angeordnet ist, der seinerseits mit den Auslegerarmen 2e drehfest verbunden ist, die über Wippenschenkel 34 zwei Abstreiferleisten 3e tragen.

An wenigstens einer Seite ist die Wippe 34 mit einem Locheinstellblech 35 versehen, über welches die Winkelvoreinstellung des Wippenschenkels 34 bewirkt werden kann, wie sich dies aus Fig. 14 ergibt. Der eine Schenkelteil des Auslegerteiles 2e ist wiederum mit einer Mehrzahl von Löchern 7e versehen, um das Längenmaß einstellen zu können, wie dies weiter oben bereits beschrieben ist

An der Tragplatte 32 ist die allgemein mit 4e bezeichnete Federvorspannungseinrichtung befestigt, die über eine Druckdoseneinstellung 36 nach außen sichtbar die Vorspannung darstellen kann.

Dabei wirkt die Feder 4e auf einen Schwenkarm 37, der am Torsionsarm 33 angelenkt ist.

In den Fig. 15 und 16 sind die Federpakete 4e bzw. 4e' dargestellt mit einer nicht näher dargestellten Vorspannungsfeder 6e und im Falle der Fig. 15 mit einem Doppelfederpaket aus einer äußeren Feder 38 und einer inneren Feder 39, über die die Vorspannung einstellbar ist. Das Gehäuse 40 weist Markierungen auf, mit denen die Einstellung und damit die Vorspannung der Feder nach außen kenntlich gemacht werden kann.

Im Falle der Fig. 16 ist eine etwas andere Konstruktion gewählt, hier ist die Markierung 40' ebenfalls am Außenumfang der Einstellspindel vorgegeben. Ansonsten ist die Konstruktion ähnlich wie in Fig. 15 mit einem inneren Federpaket 6e' und außen umgebenden Vorspannungsfedern 38' u. dgl.

Natürlich sind die beschriebenen Ausführungsbeispiele der Erfindung noch in vielfacher Hinsicht abzuänden, ohne den Grundgedanken zu verlassen. So sei darauf hingewiesen, daß die Federn 6 bzw. 13 als Tellerfedern ebenso ausgeführt sein können wie als übliche Druck- und Zugfedern. Sie können auch durch Kunststoffdämpfungssysteme ersetzt werden, durch vorgespannte Kautschukelemente oder dgl.

## Ansprüche

1. Vorrichtung zum Reinigen von Förderbändern mit wenigstens einer an schwenkbaren, gefederten Auslegern angeordneter Abstreifleiste zur Beaufschlagung der Arbeitsfläche des Gurtbandes im Untertrum, wobei die Abstreifleiste an um eine Drehachse starren Auslegerarmen angeordnet ist, wobei die Auslegerarme mit Federn zur Aufbringung des Anpreßdruckes ausgerüstet sind, dadurch gekennzeichnet, daß die Abstreifleisten an in ihrer Länge verstellbaren Auslegerarmen angeordnet sind, wobei diese Auslegerarme über einen Torsionsstab mit einseitiger Federbeaufschlagung gelagert sind.

2. Vorrichtung nach Anspruch 1, dadurch gekennzeichnet, daß zur Aufbringung des Anpreßdruckes wenigstens eine Zug- oder Druckteder an einem der Auslegerarme vorgesehen ist, wobei die Zustellkraft der jeweiligen Federn einstellbar und nach außen optisch gekennzeichnet ist.

3. Vorrichtung nach einem der vorangehenden Ansprüche, dadurch gekennzeichnet, daß neben einer Zugfeder dazu achsial auch eine Druckfeder zur Ermöglichung einer gezielten Auslenkung gegen die An preßrichtung in wenigstens einem der Auslegerarme vorgesehen ist.

4. Vorrichtung nach einem der vorangehenden Ansprüche, dadurch gekennzeichnet, daß die Auslegerarme als geteilte, in ihrer Länge einstellbare Winkelarme ausgebildet sind, wobei die Winkelarmteile über ein Gleitgelenk miteinander verbunden sind.

5. Vorrichtung nach einem der vorangehenden Ansprüche, dadurch gekennzeichnet, daß der Torsionsstab und/oder die beaufschlagenden Druck-und Zugfedern mit einer einstellbaren Meßdose mit nach außen optisch gekennzeichneter Vorspannung versehen sind.

6. Vorrichtung nach einem der vorangehenden Ansprüche, dadurch gekennzeichnet, daß der Torsionsstab aus mehreren, über Kardangelenke miteinander verbundenen Teilstäben gebildet ist.

7. Vorrichtung nach einem der vorangehenden Ansprüche, dadurch gekennzeichnet, daß die an den Auslegerarmen angeordneten Abstreifleisten, wie an sich bekannt, als Tandemleisten parallel nebeneinander auf einer Schwenk/Wippenlagerung angeordnet sind, wobei der Schwenkausschlag über Einstellmittel in beiden Richtungen begrenzbar ist.

8. Vorrichtung nach Anspruch 7, dadurch gekennzeichnet, daß jede Abstreifleiste (3) aus einer Mehrzahl von nebeneinander liegenden lösbar auf einem Träger verbindbaren Lamellen gebildet ist.

9. Vorrichtung nach einem der vorangehenden Ansprüche, dadurch gekennzeichnet, daß die Lamellen (24) auf einem gemeinsamen Leisten- bzw. Lamellenträger (20) an der Achse der Abstreifleisten federnd befestigt sind.

10. Vorrichtung nach einem der vorangehenden Ansprüche, dadurch gekennzeichnet, daß der Lamellenträger (20) für gegenüberliegende Lamellen als Hohlprofil ausgebildet ist mit darin angeordneter Abstreifleistenachse, wobei zwischen Abstreifleistenachse und Lamellenträger beidseitig ein Federelement vorgesehen ist.

EP 0 396 890 A1

*Fig.1*

*Fig.2*

*Fig.3*

Fig. 4

Fig. 5

Fig. 6

Fig. 6a

Fig. 9

Fig. 7

Fig. 8

Fig. 11

Fig. 10

Fig. 12

Fig. 13

EP 0 396 890 A1

Fig. 14

EP 0 396 890 A1

Fig. 15

Fig. 16

))) Europäisches
Patentamt

**EUROPÄISCHER RECHERCHENBERICHT**

Nummer der Anmeldung

## EINSCHLÄGIGE DOKUMENTE

EP 90105632.5

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| Y | EP - A1 - 0 306 719 (HENKEL) * Fig. 1 * -- | 1,7 | B 65 G 45/12 |
| Y | US - A - 4 402 394 (STOLL) * Fig. 2; Spalte 6, Zeilen 30-33 * -- | 1,7 | |
| Y | US - A - 4 036 354 (REITER) * Fig. 3; Spalte 5, Zeilen 46-48 * -- | 1 | |
| Y | US - A - 4 533 036 (GORDON) * Fig. 1 * -- | 1 | |
| A | EP - A1 - 0 157 246 (JAKOBS) * Fig. 4 * -- | 1,2,5 | |
| A | EP - A2 - 0 004 809 (FIVES-CAIL) * Fig. 16 * ---- | 1,2 | RECHERCHIERTE SACHGEBIETE (Int. Cl.⁵)<br><br>B 65 G |

Der vorliegende Recherchenbericht wurde für alle Patentansprüche erstellt.

| Recherchenort<br>WIEN | Abschlußdatum der Recherche<br>03-07-1990 | Prüfer<br>BAUMGARTNER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82